# EUROPEAN PATENT APPLICATION

(11) **EP 4 403 699 A1**
(43) Date of publication of application: **24.07.2024**
(21) Application number: 22952142.2
(22) Date of filing: 15.12.2022
(51) Int. Cl.: E01B 9/68, E01B 9/62, E01B 19/00, H04W 4/38

(54) **DYNAMIC LOAD MONITORING PAD APPARATUS, DEVICE, AND LOAD MONITORING SYSTEM**

(30) Priority: 05.12.2022 CN 202211552345
(71) Applicant: Zhejiang Tiantie Industry Co., Ltd., Taizhou, Zhejiang 317200 (CN)
(72) Inventor: WANG, Bo, Zhejiang 317200 (CN); LI, Minhui, Zhejiang 317200 (CN); XU, Jiding, Zhejiang 317200 (CN); NIU, Wenqiang, Zhejiang 317200 (CN); ZHENG, Jingyu, Zhejiang 317200 (CN); TANG, Jianzhi, Zhejiang 317200 (CN)
(74) Representative: Taor, Simon Edward William
(86) International application number: PCT/CN2022/139190
(87) International publication number: WO 2024/119534

(57) **Abstract**

The present invention provides a load dynamic monitoring pad device, equipment and load monitoring system, comprising a base plate installed between the track bed and the rail pad, a sensor fixing plate, a carrying pad, a plurality of pressure sensors, and a plurality of load transfer columns. The sensor fixing plate has a plurality of upward opening sensor mounting slots, and the carrying pad has a plurality of sensor limiting slots, which can be assembled with the sensor mounting slots to form a plurality of sensor accommodations, and each pressure sensor is accommodated in each sensor accommodations. The upper end of the sensor is in contact with the bottom of the sensor limiting slot, and the lower end is mounted on the track bed through a load transfer column and the base plate. Therefore, it is possible to monitor the pressure under the rail pads in real time through the pressure sensors. The pressure sensor is fixed and limited by the above method, which can avoid displacement, detachment, and other situations that may affect the monitoring effect due to track vibration during the monitoring process. It can be used for long-term monitoring.

## Description

### Field of the Invention

The present invention belongs to the field of track vibration reduction and noise reduction, and specifically relates to a load dynamic monitoring pad device, equipment and load monitoring system.

### Background of the Invention

Track structures are widely used in sectors such as industry, traffic and transportation. The measurement of the basic characteristics of a dynamic load track can provide important reference for track safety assessment, which is conductive to timely detection of rail wear, fastener failure and other problems. Wherein the strain and vibration of the track are the main parameters for evaluating the characteristics of the track.

In the prior art, performance parameters such as track load are mainly detected by inspection vehicles with detection devices or temporary arranging of sensors on the track. However, the inspection vehicles can only detect relative vibration, and cannot detect real-time vibration of a track under actual working conditions. Temporary arranging of sensors requires multiple steps such as installation, cable, testing and adjustment, and after testing, the sensors and their cables need to be removed, which is time-consuming and laborious. Moreover, temporarily arranged sensors are not suitable for long-term testing. Under the influence of long-term track vibration, the detection end and cables of the sensors are prone to poor contact.

In addition, the signals collected by the sensors are usually analog signals. After completing the collecting process, analog-to-digital conversion and computational processing have to be done before the track management personnel or staff can check any information thereof. This leads to a considerable degree of lag in the track information obtained by the management personnel or etc., making it difficult to detect abnormal situations in the track in a timely manner.

### Summary of the Invention

The present invention is carried out to solve the aforementioned problems, and aims to provide a load monitoring system that can monitor the load of the rails in real-time and provide timely and convenient access to monitoring data for management personnel and staff. The present invention adopts the following technical scheme:
The present invention provides a load dynamic monitoring pad device, characterized by comprising: a base plate, arranged on the track bed; a sensor fixing plate, arranged on the base plate, and has a plurality of upward opening sensor mounting slots; a carrying pad, arranged on the sensor fixing plate, and has a plurality of downward opening sensor limiting slots corresponding to the sensor mounting slots, respectively, each said sensor limiting slot is spliced with the corresponding said sensor mounting slot to form a sensor containing part; a plurality of pressure sensors, arranged in said sensor containing parts, respectively, the detection end of each said pressure sensor abuts the bottom of said sensor limiting slot; and a plurality of load transfer columns, arranged in said sensor containing parts, respectively, the two ends of each said load transfer column abut the bottom of said pressure sensor and said base plate, respectively.

The load dynamic monitoring pad device provided by the present invention can also have the following technical features, wherein said pressure sensors and said load transfer columns are all cylindrical in shape, said sensor mounting slots are circular through-holes matching said pressure sensors, said sensor limiting slots are cylindrical slots matching said pressure sensors.

The load dynamic monitoring pad device provided by the present invention can also have the following technical features, wherein said load transfer column has a first column part and a second column part formed as a whole, the diameter of said first column part is larger than the diameter of said second column part, the bottom of said sensor mounting slot is provided with a circular through-hole, and the diameter of said circular through-hole is smaller than the inner diameter of said sensor mounting slot, a circle of supporting step is formed at the bottom of the sensor mounting slot, said first column part is mounted on said supporting step, and the bottom surface of said second column part abuts said base plate.

The load dynamic monitoring pad device provided by the present invention can also have the following technical features, wherein said sensor fixing plate is a rectangular plate, a plurality of said sensor mounting slots are distributed at the corner parts or the edge parts of said sensor fixing plate, said pressure sensor is connected with cables for power supply and outputting detection signals, said sensor fixing plate also has a lower cable groove which is connected to all said sensor mounting slots, and runs through the side edge of said sensor fixing plate, said carrying pad also has an upper cable groove corresponding to said lower cable groove, which is spliced with said lower cable groove to form a cable routing part, the cables extend in said cable routing part and extend from the side of said sensor fixing plate.

The load dynamic monitoring pad device provided by the present invention can also have the following technical features, wherein said lower cable groove comprises: a cable assembling portion, arranged in the middle of said sensor fixing plate and extends along the length direction of said sensor fixing plate; and a plurality of cable branching portions, the two ends of said cable branching portion is connected to said sensor mounting slot and said cable assembling portion, and the cables connected to said pressure sensors respectively extend along said cable branching portions and converge to said cable assembling portion, the cross-section of said assembling portion and the cross-sections of said cable branching portions are all rectangular.

The load dynamic monitoring pad device provided by the present invention can also have the following technical features, wherein one end of said cable assembling portion located at the side edge of said sensor fixing plate is also provided with an adapter groove, the cross-section of said adapter groove is semi-circular, said upper cable groove has an adapter limiting groove with a semi-circular cross-section, said adapter limiting groove and said adapter groove forms an adapter containing part with a circular cross-section for containing an adapter, the adapter is used for assembling a plurality of said cables.

The load dynamic monitoring pad device provided by the present invention can also have the following technical features, wherein said sensor fixing plate is a rectangular plate, a plurality of said sensor mounting slots are symmetrically distributed below both sides of said rail.

The load dynamic monitoring pad device provided by the present invention can also have the following technical features, wherein said base plate, said sensor fixing plate and said carrying pad are all rectangular steel plates with consistent length and width, the thickness of said sensor fixing plate is 10mm∼15mm.

The present invention provides a load dynamic monitoring equipment, characterized by comprising: a load dynamic monitoring pad device, arranged between the rail pad of the rail and the track bed, and has a plurality of pressure sensors for monitoring the pressure under said rail pad; a signal transmission device, connected to said pressure sensors, and obtains analog pressure signals from said pressure sensors and converts them into digital signals; and a calculation-analysis device, communicating with said signal transmission device, obtains said digital signals from said signal transmission device and perform calculation and analysis, wherein said load dynamic monitoring pad device is the aforementioned load dynamic monitoring pad device.

The present invention provides a load monitoring system, characterized by comprising: a load dynamic monitoring equipment, for dynamically monitoring the pressure under the rail pad of the rail, and obtaining real-time monitoring results; a plurality of monitoring terminals; and a communication equipment, connected to said load dynamic monitoring equipment and said monitoring terminals, for enabling said monitoring terminals to obtain said real-time monitoring results, wherein said load dynamic monitoring equipment is the aforementioned load dynamic monitoring equipment.

### Effects of the invention

According to the load dynamic monitoring pad device, the load dynamic monitoring equipment and the load monitoring system provided by the present invention, the load dynamic monitoring pad device comprises the base plate arranged between the track bed and the rail pad, the sensor fixing plate, the carrying pad, the pressure sensors and the load transfer columns. Wherein the sensor fixing plate has a plurality of upward opening sensor mounting slots, and the carrying pad has a plurality of sensor limiting slots, which can be spliced with the sensor mounting slots to form the sensor containing parts. The pressure sensors are respectively accommodated in the sensor containing parts, with the upper end of each pressure sensors abuts the bottom of the sensor limiting slot, and the lower end mounted on the track bed through a load transfer column and a base plate. Therefore, it is possible to monitor the pressure under the rail pad in real time by using the pressure sensors. Moreover, the pressure sensors are fixed and limited in the above manner, so that the situations that may affect the monitoring due to track vibration during the monitoring process, such as displacement or detachment of the pressure sensors and so on, can be avoided. Therefore, the pressure sensors can be used for long-term monitoring. As mentioned above, the load dynamic monitoring pad device of the example is directly installed in the track structure, which in an integrated device that can easily achieve various monitoring tasks for specified time periods, short-term, and long-term, saving the workload and time of repeatedly deploying and recovering sensors and cables.

### Brief Description of the Drawings

Fig. 1 shows a structural diagram of the load monitoring system in an example of the present invention;
Fig. 2 shows a structural diagram of the load dynamic monitoring equipment in an example of the present invention;
Fig. 3 shows a sectional view of the structure of the track portion in an example of the present invention;
Fig. 4 shows a structural breakdown diagram of the load dynamic monitoring pad device in an example of the present invention;
Fig. 5 shows a side view of the load dynamic monitoring pad device in an example of the present invention, with a partial sectional view;
Fig. 6 shows a three-dimensional view of the sensor and its cable in an example of the present invention;
Fig. 7 shows a three-dimensional view of the load transfer column in an example of the present invention;
Fig. 8 shows a three-dimensional view of the sensor fixing plate in an example of the present invention;
Fig. 9 shows a top view of the sensor fixing plate in an example of the present invention;
Fig. 10 shows a three-dimensional view of the sensor fixing plate at a different angle in an example of the present invention;
Fig. 11 shows a three-dimensional view of the carrying pad in an example of the present invention;
Fig. 12 shows a three-dimensional view of the carrying pad at a different angle in an example of the present invention;
Fig. 13 shows an enlarged view of the inner part of box A in Fig. 5.

### Detailed Description of the preferred embodiments

In order to make the technical means, creative features, objectives and effects of the present invention easy to understand, the following provides a specific explanation of the load dynamic monitoring pad device, equipment, and load monitoring system of the present invention in combination with an example and figures.

### Example

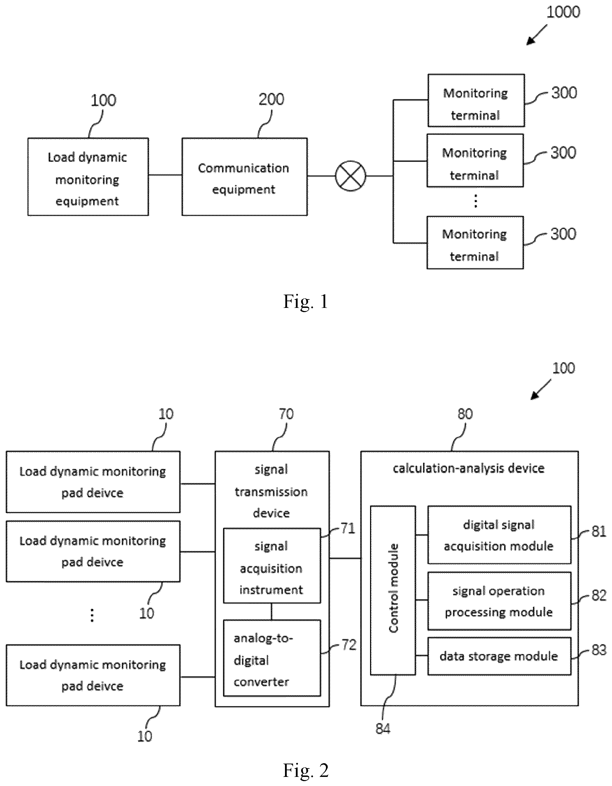

Fig. 1 shows a structural diagram of the load monitoring system in this example.

As shown in Fig. 1, the load monitoring system 1000 comprises a load dynamic monitoring equipment 100, a communication equipment 200 and a plurality of monitoring terminals 300. The load dynamic monitoring equipment 100 is used for real-time monitoring of rail loads. The communication equipment 200 is communicably connected to the load dynamic monitoring equipment 100 and a plurality of monitoring terminals 300. Each monitoring terminal 300 may obtain real-time monitoring results of the load dynamic monitoring equipment 100 through the communication equipment 200. Wherein the monitoring terminal 300 is a computer, tablet, smartphone, etc. held by track management personnel or staff. The communication equipment 200 is connected to the load dynamic monitoring equipment 100 by a signal transmission line, and is connected to a plurality of monitoring terminals 300 through wireless communication.

Fig. 2 shows a structural diagram of the load dynamic monitoring equipment in this example.

As shown in Fig. 2, The load dynamic monitoring equipment 100 comprises a plurality of load dynamic monitoring pad devices 10, a signal transmission device 70 and a calculation-analysis device 80. The load dynamic monitoring pad devices 10 are connected to the signal transmission device 70 by cables (i.e., signal transmission lines), and the analog pressure signals obtained thereof are transmitted to the signal transmission device 70 by the cables. The signal transmission device 70 converts the collected analog pressure signals into digital signals. The signal transmission device 70 and the calculation-analysis device 80 are also connected by a signal transmission line. The signal transmission device 70 transmits the converted digital signals to the calculation-analysis device 80, and the calculation-analysis device 80 performs calculation, analysis, and storage of the digital signals. The calculation-analysis device 80 is connected to the aforementioned communication equipment 200 for the monitoring terminals 300 to obtain the calculation and analysis results. Wherein the load dynamic monitoring pad devices 10 are directly installed in the track.

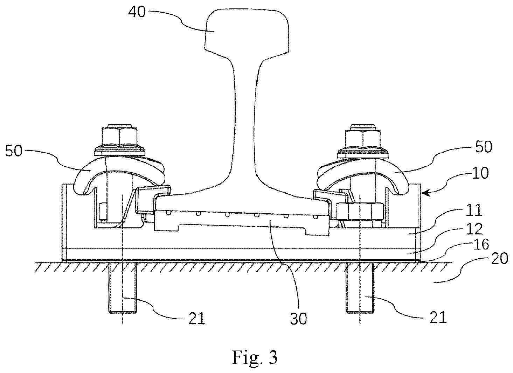

Fig. 3 shows a sectional view of the structure of the track portion in this example.

As shown in Fig. 3, the track (portion) comprises a track bed 20, the load dynamic monitoring pad devices 10, a rail pad 30, a rail 40, and rail fasteners 50.

Wherein the load dynamic monitoring pad device 10 is fixed on the track bed 20 with track spikes 21. The rail pad 30 is installed on the load dynamic monitoring pad device 10, the rail 40 is installed on the rail pad 30 and fixed by the rail fasteners 50. The rail pad 30 is an elastic pad made of rubber material, used to achieve certain vibration reduction and noise reduction effects. The load dynamic monitoring pad device 10 is used for real-time monitoring of the pressure under the rail pad 30. In this example, a plurality of load dynamic monitoring pad devices 10 are installed under a plurality of rail pads 30 of a section of the track.

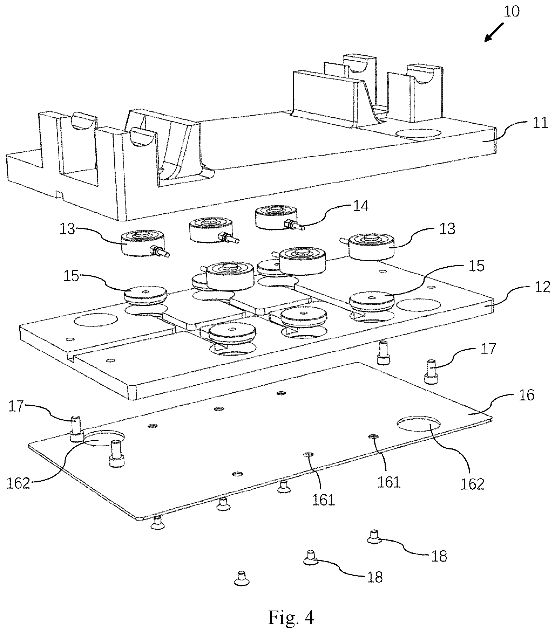

Fig. 4 shows a structural breakdown diagram of the load dynamic monitoring pad device in this example.

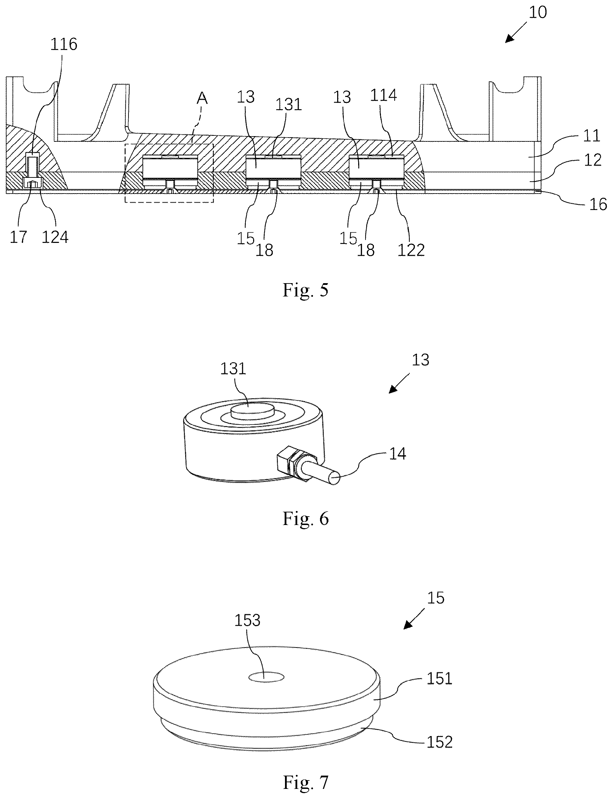

Fig. 5 shows a side view of the load dynamic monitoring pad device in this example, with a partial sectional view.

As shown in Figs. 4-5, the load dynamic monitoring pad device 10 comprises a carrying pad 11, a sensor fixing plate 12, a plurality of pressure sensors 13 and their cables 14, a plurality of load transfer columns 15, a base plate 16, a plurality of fixing plate fastening screws 17, and a plurality of base fixing screws 18. The pressure sensors 13 are used to collect analog pressure signals of the steel rail 40 and the rail pad 30. The carrying pad 11, the sensor fixing plate 12, and the base plate 16 are used to accommodate and fix the pressure sensors 13 and their cables 14. The load transfer columns 15 are respectively installed under the pressure sensors 13, playing a role in load transfer and improving the stability of the pressure sensors 13. Since the carrying pad 11, the sensor fixing plate 12, and the base plate 16 are designed based on the structure of the pressure sensor 13 and its cable 14, the following will first describe the structure of the pressure sensor 13 and its cable 14.

Fig. 6 shows a three-dimensional view of the sensor and its cable in this example.

As shown in Fig. 6, the pressure sensor 13 in this example is cylindrical in shape as a whole, with a detection end 131 located in the upper middle part. The side wall of the pressure sensor 13 is connected with a corresponding cable 14 for power supply and output of detection signals (i.e., analog pressure signals). In Fig. 6, only a small section of the cable 14 connected to the pressure sensor 13 is shown, while in fact cable 14 extends to the outside of the load dynamic monitoring pad device 10 and is connected to the aforementioned signal transmission device 70. In addition, a plurality of cables 14 in one load dynamic monitoring pad device 10 need to be converged into a single line through an adapter and further connected to the signal transmission device 70. The load dynamic monitoring pad device 10 has a structure for accommodating the cables 14, and the track bed 20 also has a groove structure for accommodating the single line.

Fig. 7 shows a three-dimensional view of the load transfer column in this example.

As shown in Fig. 7, the load transfer column 15 comprises a first column part 151 and a second column part 152 formed as a whole, both of which are cylindrical in shape. Wherein the diameter of the first column part 151 is larger than the diameter of the second column part 152, thus forming a stepped structure at the connection between the two. A through screw mounting hole 153 is provided in the middle of the load transfer column 15. On the side near the end of the second column part 152, the diameter of the screw mounting hole 153 gradually increases. The base fixing screw 18 is a countersunk screw, and the shape of the screw mounting hole 153 matches the base fixing screw 18.

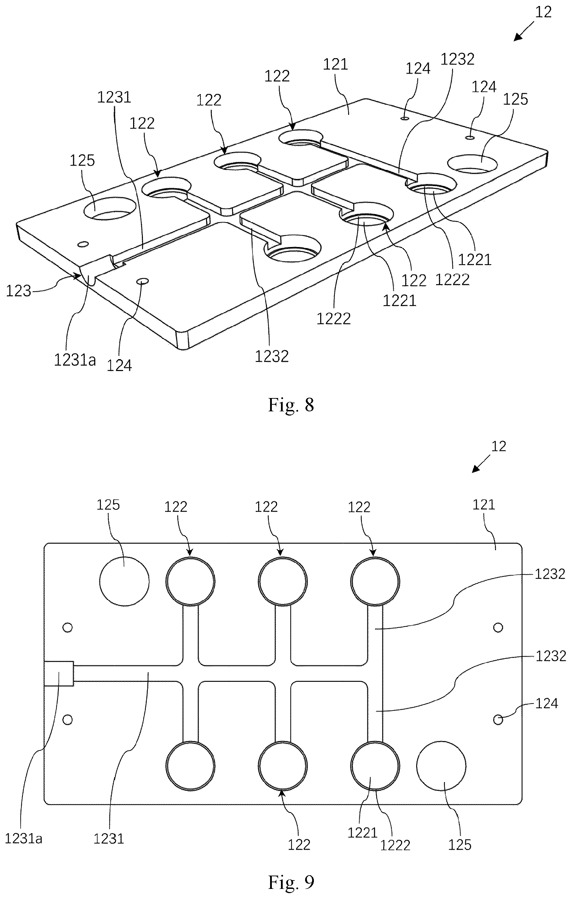

Fig. 8 shows a three-dimensional view of the sensor fixing plate in this example.

Fig. 9 shows a top view of the sensor fixing plate in this example.

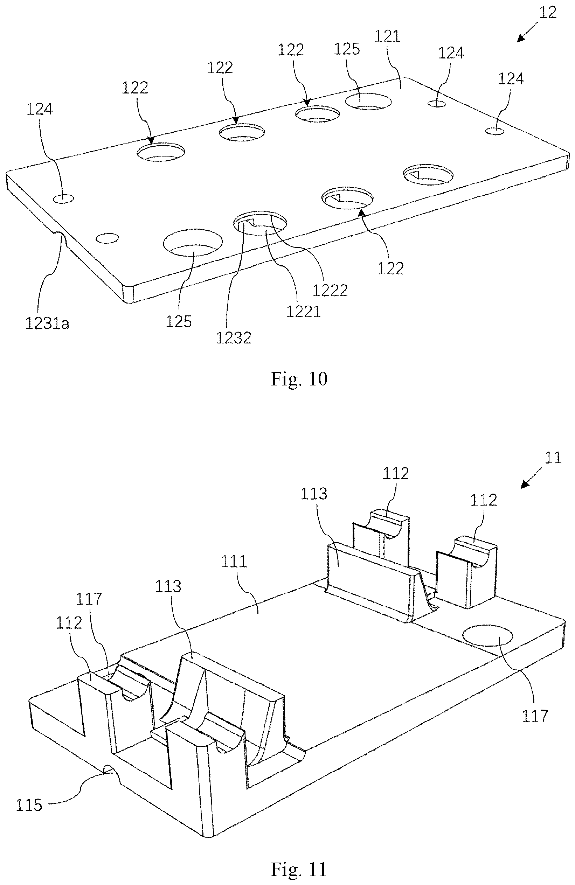

Fig. 10 shows a three-dimensional view of the sensor fixing plate at a different angle in this example.

As shown in Figs. 8-10, the sensor fixing plate 12 is a steel plate, comprising a fixing plate body 121, a plurality of sensor mounting slots 122, a lower cable groove 123, a plurality of counterbored holes 124, and a pair of first track spike mounting holes 125.

The fixing plate body 121 is rectangular in shape, with chamfers on all four corners. The thickness of the fixing plate body 121 ranges from 10mm to 15mm.

The sensor mounting slots 122 are cylindrical holes distributed at the corner parts or edge parts of the fixing plate body 121, and the diameter and depth of each sensor mounting slot 122 match the pressure sensor 13. After installation, the sensor mounting slots 122 open upwards. In this example, the number of the sensor mounting slots 122 is six. Along the central axis of the fixing plate body 121 in its length direction, six sensor mounting slots 122 are symmetrically distributed on both sides, and three sensor mounting slots 122 on the same side are evenly spaced. That is, when installed under the rail 40, six pressure sensors 13 are symmetrically distributed on both sides below the rail 40. As shown in Figs. 10-11, a circular through-hole 1221 is provided at the bottom of the sensor mounting slot 122, and its diameter is slightly smaller than the inner diameter of the sensor mounting slot 122. A supporting step 1222 is formed at the bottom of the sensor mounting slot 122 to support and limit the load transfer column 15.

The lower cable groove 123 is used to accommodate and fix the cables 14, to avoid displacement and other issues that may cause poor contact, detachment, and affect signal acquisition as the train passes by. The lower cable groove 123 is provided on one surface of the fixing plate body 121, comprising a cable assembling portion 1231 and a plurality of cable branching portions 1232.

Wherein the cable assembling portion 1231 is arranged in the middle of the fixing plate body 121 and extends along the length direction of the fixing plate body 121, with a rectangular cross-section. The cable assembling portion 1231 is used to accommodate the cables 14. One end of the cable assembling portion 1231 is connected to one side of the fixing plate body 121 in the length direction, and a joint holding portion 1231a is provided on this end. The cross-section of the joint holding portion 1231a is semi-circular.

One end of the cable branching portion 1232 is connected to one of the sensor mounting slot 122, and the other end is connected to the cable assembling portion 1231. Each cable branching portion 1232 extends along the width direction of the fixing plate body 121, which is perpendicular to the cable assembling portion 1231. The connection position between the cable branching portion 1232 and the cable assembling portion 1231 is chamfered to prevent the cables 14 from being damaged by sharp corners. The cross-section of the cable branching portion 1232 is also rectangular, and its size is smaller than the size of the cross-section of cable assembling portion 1231.

Four counterbored holes 124 are arranged in groups of two at the two ends of the fixing plate body 121 in its length direction, used for installing fastening screws to fix the sensor fixing plate 12 and the carrying pad 11 together. The nuts of the fastening screws are embedded in the counterbored holes 124, so the bottom surface of the sensor fixing plate 12 remains flat after installing the screws.

The first track spike mounting holes 125 are circular through-holes matched with the track spike 21, used for installing the track spikes 21. A pair of first track spike mounting holes 125 are provided at two corner parts on the diagonal of the fixing plate body 121.

Fig. 11 shows a three-dimensional view of the carrying pad in this example.

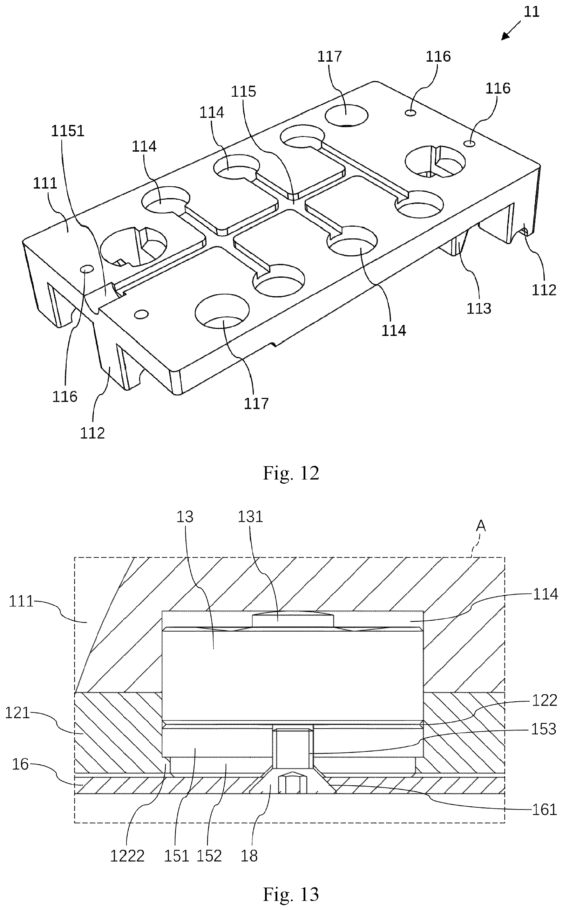

Fig. 12 shows a three-dimensional view of the carrying pad at a different angle in this example.

As shown in Figs. 11-12, the carrying pad 11 is a steel component, comprising a carrying pad body 111, a plurality of fastener fixing parts 112, a pair of rail pad fixing parts 113, a plurality of sensor limiting slots 114, an upper cable groove 115, a plurality of fixing screw mounting holes 116, and a pair of second track spike mounting holes 117.

The carrying pad body 111 is roughly rectangular in shape, with chamfers on all four corners, and its length and width are consistent with the fixing plate body 121.

The fastener fixing parts 112 extends vertically from one surface of the carrying pad body 111. The end of the fastener fixing part 112 has a circular groove for fixing the rail fastener.

The rail pad fixing parts 113 is wedge-shaped. The rectangular rail pad 30 is loaded onto the carrying pad body 111, and both sides of the rail pad 30 are fixed by a pair of wedge-shaped rail pad fixing parts 113.

The specific structures of the fastener fixing parts 112 and the rail pad fixing parts 113 are based on prior art and will not be further described here.

The sensor limiting slots 114 are used to install and limit the pressure sensors 13. The sensor limiting slots 114 are cylindrical slots that match the pressure sensors 13. The inner diameter of the sensor limiting slot 114 is consistent with the sensor mounting slot 122. After installation, the sensor limiting slots 114 open downwards.

The upper cable groove 115 is also used to accommodate and fix the cables 14, and its shape is consistent with the shape of the lower cable groove 123. Wherein a joint limiting part 1151 is provided at one end of the upper cable groove 115 connected to the carrying pad body 111, with a semi-circular cross-section. The shape and position of the joint limiting part 1151 correspond to the shape and position of the joint holding portion 1231a of the sensor fixing plate 12, and can be spliced with the joint holding portion 1231a to form a circular cross-section adapter containing part for accommodating and fixing an adapter of the cables 14.

The fixing screw mounting holes 116 is used for installing the fastening screws. The distribution of four fixing screw mounting holes 116 corresponds to the distribution of four counterbored holes 124, so that the carrying pad 11 and the sensor fixing plate 12 can be fixedly connected by fastening screws.

The second track spike mounting holes 117 are used for installing the track spikes 21. A pair of second track spike mounting holes 117 are distributed at two corner parts on the diagonal of the carrying pad body 111.

As shown in Fig. 5, the base plate 16 is a rectangular steel plate with chamfers on all four corners, and its length and width are also consistent with the fixing plate body 121.

A plurality of screw holding holes 161 are provided on both sides of the base plate 16 in its width direction for connecting and fixing load transfer columns 15 arranged in the sensor mounting slots 122. In this example, the number of the screw holding holes 161 is six, and the distribution of six screw holding holes 161 corresponds to the distribution of six sensor mounting slots 122. After installation, each screw holding hole 161 is arranged on the central axis of the corresponding sensor mounting slot 122. The aperture of the upper end of the screw holding holes 161 (i.e., the end close to the sensor fixing plate 12) is smaller than the aperture of the lower end (i.e., the end close to the track bed 20). As shown in Fig. 6, when viewed from the side, the cross-section of the screw holding hole 161 is trapezoidal, and the screw holding hole 161 can be connected to the screw mounting hole 153 at the bottom of the load transfer column 15 to form a structure similar to a counterbored hole. The base fixing screws 18 are installed in the structure similar to a counterbored hole, so after installing the base fixing screws 18, the bottom surface of the base plate 16 remains flat.

The base plate 16 is further provided with a pair of third track spike mounting holes 162, distributed at two corner parts on the diagonal of the base plate 16. The size and distribution of the pair of first track spike mounting holes 125 on the sensor fixing plate 12, the pair of second track spike mounting holes 117 on the carrying pad 11, and the pair of third track spike mounting holes 162 on the base plate 16 are consistent, and can be connected to form a pair of track spike mounting holes after installation, allowing for the installation of track spikes 21 to fix the base plate 16, the sensor fixing plate 12, and the carrying pad 11 on the track bed 20.

As mentioned above, the bottom of the sensor mounting slot 122 has a circular through-hole 1221, and the second column part 152 of the load transfer column 15 is embedded at the circular through-hole 1221. To avoid damaging the track bed 20 due to large loads and small contact areas, the steel base plate 16 with a certain thickness is arranged below the sensor fixing plate 12 and the load transfer columns 15.

As shown in Figs. 5-6, the shape and distribution of the sensor limiting slots 114 and upper cable groove 115 on one surface of the carrying pad 11 correspond to the shape and distribution of the sensor mounting slots 122 and lower cable groove 123 on one surface of the sensor fixing plate 12. When installed together, the upper cable groove 115 and the lower cable groove 123 can be spliced to form a connected cable routing part, and the corresponding sensor limiting slots 114 and sensor mounting slots 122 can be spliced to form six sensor containing parts.

Fig. 13 shows an enlarged view of the inner part of box A in Fig. 5.

As shown in Figs. 4-5 and 13, after installation, six pressure sensors 13 and six load transfer columns 15 are respectively embedded in the six sensor containing parts, and their cables 14 are accommodated in the cable routing part. Wherein the bottoms of the load transfer columns 15 (i.e., the bottoms of the second columns 152) abut the base plate 16, and the load transfer columns 15 is fixed and laterally limited by the base fixing screws 18. The first column part 151 of the load transfer column 15 abuts the supporting step 1222 at the bottom of the sensor mounting slot 122, and the second column part 152 is embedded in the circular through-hole 1221. The bottom of the pressure sensor 13 abuts the upper end of the load transfer column 15, and the detection end 131 at the upper end of the pressure sensor 13 abuts the bottom of the sensor limiting slot 114, thereby ensuring the stability of the pressure sensors 13 during the monitoring process.

The cables 14 of the pressure sensors 13 are accommodated in the cable routing part. Specifically, the cable 14 extends from the corresponding cable branching portion 1232 to the cable assembling portion 1231, and extends from one side of the length direction of the fixing plate body 121 to the outside. The adapter connected to the cables 14 is embedded and fixed in the adapter containing part.

In addition, the load dynamic monitoring pad device 10 of this example has the same overall shape and size as the existing iron baseplate product, so it can directly replace the existing iron baseplate product on the track without changing other track structures.

As shown in Fig. 2, the signal transmission device 70 comprises a signal acquisition instrument 71 and an analog-to-digital converter 72. The signal acquisition instrument 71 is connected to the pressure sensors 13 to collect analog signals detected by the pressure sensors 13. The analog-to-digital converter 72 is used to convert the collected analog signals into digital signals.

The calculation-analysis device 80 comprises a digital signal acquisition module 81, a signal operation processing module 82, a data storage module 83, and an analysis side control module 84. The digital signal acquisition module 81 is used to obtain the converted digital signals from the analog-to-digital converter 72. The signal operation processing module 82 is used to process the obtained digital signals according to a predetermined algorithm and obtain real-time monitoring results. The data storage module 83 is used to store the digital signals and the real-time monitoring results. The analysis side control module 84 is used to control the operation of the aforementioned modules.

### Effects of the example

According to the load dynamic monitoring pad device 10, the load dynamic monitoring equipment 100 and the load monitoring system 1000 provided by the example, the load dynamic monitoring pad device 10 comprises the base plate 16 arranged between the track bed 20 and the rail pad 30, the sensor fixing plate 12, the carrying pad 11, the pressure sensors 13 and the load transfer columns 15. Wherein the sensor fixing plate 12 has a plurality of upward opening sensor mounting slots 122, and the carrying pad 11 has a plurality of sensor limiting slots 115, which can be spliced with the sensor mounting slots 122 to form the sensor containing parts. The pressure sensors 13 are respectively accommodated in the sensor containing parts, with the upper end of each pressure sensors 13 abuts the bottom of the sensor limiting slot 115, and the lower end mounted on the track bed 20 through a load transfer column 15 and a base plate 16. Therefore, it is possible to monitor the pressure under the rail pad 30 in real time by using the pressure sensors 13. Moreover, the pressure sensors 13 are fixed and limited in the above manner, so that the situations that may affect the monitoring due to track vibration during the monitoring process, such as displacement or detachment of the pressure sensors and so on, can be avoided. Therefore, the pressure sensors 13 can be used for long-term monitoring. As mentioned above, the load dynamic monitoring pad device 10 of the example is directly installed in the track structure, which in an integrated device that can easily achieve various monitoring tasks for specified time periods, short-term, and long-term, saving the workload and time of repeatedly deploying and recovering sensors and cables.

In the example, the rail pads 30 in the track are all equipped with the load dynamic monitoring pad device 10. The six pressure sensors 13 in each load dynamic monitoring pad device 10 are symmetrically distributed on both sides below the rail 40. Therefore, the track parameters can be accurately measured in a multi-point segmented detection method, and the symmetrically distributed pressure sensors 13 are conducive to keeping the under rail pads 30 on top of them uniformly loaded.

Furthermore, the sensor fixing plate 12 has a lower cable groove 123, and the carrying pad 11 has a corresponding upper cable groove 115. The two can be spliced to form a continuous cable routing groove, which can accommodate and fix the cables 14 of the pressure sensors 13, and assemble the cables 14 and lead them out, thereby facilitating the connection of the cables 14. And the poor contact and damage caused by track vibration during testing, which may affect monitoring, can be avoided.

Furthermore, the load transfer column 15 under each pressure sensor 13 comprises a cylindrical first column part 151 and a cylindrical second column part 152 with a smaller diameter. The sensor mounting slot 122 is penetrated at the bottom and has a supporting step 1222, and the load transfer column 15 is embedded and fixed at the supporting step 1222. The bottom of the load transfer column 15 has a screw mounting hole 153, and is connected to the base plate 16 by the base fastening screw 18. Therefore, the loads can be stably transmitted through the load transfer columns 15. The base plate 16 is a steel plate with a certain thickness, which can avoid damage to the track bed 20 due to large loads and small contact areas at the bottoms of the load transfer columns 15, and improves the stability and safety of the load dynamic monitoring pad device 10 and track bed 20.

In addition, the load dynamic monitoring pad device 10 of the example is consistent with the existing iron baseplate in overall size and upper surface structure. Therefore, the load dynamic monitoring pad device 10 can not only function as the original iron baseplate, but also measure the dynamic load on the rail on the iron baseplate by the pressure sensors 13 fixed in it. And the load dynamic monitoring pad device 10 can be interchanged and installed in real-time with the existing iron baseplate on the track, without changing other track structures and affecting the operation of the track line, making deployment convenient and fast.

Furthermore, the load dynamic monitoring equipment 100 further comprises the signal transmission device 70 and the calculation-analysis device 80, which can convert the analog signals collected by the pressure sensors 13 into digital signals, and obtain the calculation and analysis results of the digital signals according to the predetermined algorithm, thereby obtaining real-time monitoring results. The load monitoring system 1000 further comprises the communication equipment 200 and the plurality of monitoring terminals 300. Therefore, through the communication equipment 200, the monitoring terminals 300 held by track management personnel or staff can obtain real-time monitoring results, enabling the track management personnel and staff to obtain track information in real time, detect abnormal situations in the track in a timely manner, and handle them accordingly, thereby ensuring the safety and stability of track operation.

The above example is only used to illustrate the specific embodiment of the present invention, and the present invention is not limited to the scope of the description of the above example.

In the above example, six pressure sensors 13 are arranged under the rail pad 30. Alternatively, according to the size of the rail pad 30, four or eight pressure sensors 13 can be provided. And four or eight sensor limiting slots 114, sensor mounting slots 122 and cable routing groove can be correspondingly provided on the carrying pad 11 and the sensor fixing plate 12. The corresponding technical effects can also be achieved.

In the above example, the pressure sensor 13 is in a cylindrical shape as a whole, and the sensor limiting slots 114 on the carrying pad 11 and the sensor mounting slots 122 on the sensor fixing plate 12 are all matching cylindrical slots. Alternatively, the pressure sensor 13 can also be of other shapes, and the shape and size of the sensor limiting slots 114 and the sensor mounting slots 122 match them, which can also achieve the corresponding technical effects.

In the above example, the cross-section of the upper cable groove 115 on the carrying pad 11 and the lower cable groove 123 on the sensor fixing plate 12 are both rectangular, assembled to form a cable routing part with a rectangular cross-section. Alternatively, the upper cable groove 115 and the lower cable groove 123 can also be of other shapes, such as having a semi-circular cross-section, which can be assembled to form a cable routing part with a circular cross-section and also achieve the corresponding technical effects.

In the above example, the cable branching portions 1232 of the lower cable groove 123 all extend along the width direction of the fixing plate body 121, and perpendicular to the cable assembling portion 1231. Alternatively, the cable branching portions 1232 can also extend obliquely relative to the cable assembling portion 1231, which can also achieve the corresponding technical effects.

In the above example, the communication equipment 200 is connected to the plurality of monitoring terminals 300 through wireless communication. Alternatively, the communication equipment 200 can also be connected to the monitoring terminals 300 through other means, such as connecting to some computers through fiber optics, which can also achieve the corresponding technical effects.

## Claims

1. A load dynamic monitoring pad device for monitoring the pressure under the rail pad of the rail, **characterized by** comprising:
a base plate, arranged on the track bed;
a sensor fixing plate, arranged on the base plate, and has a plurality of upward opening sensor mounting slots;
a carrying pad, arranged on the sensor fixing plate, and has a plurality of downward opening sensor limiting slots corresponding to the sensor mounting slots, respectively, each said sensor limiting slot is spliced with the corresponding said sensor mounting slot to form a sensor containing part;
a plurality of pressure sensors, arranged in said sensor containing parts, respectively, the detection end of each said pressure sensor abuts the bottom of said sensor limiting slot; and
a plurality of load transfer columns, arranged in said sensor containing parts, respectively, the two ends of each said load transfer column abut the bottom of said pressure sensor and said base plate, respectively.

2. The load dynamic monitoring pad device according to claim 1, **characterized in that**:
wherein said pressure sensors and said load transfer columns are all cylindrical in shape,
said sensor mounting slots are circular through-holes matching said pressure sensors,
said sensor limiting slots are cylindrical slots matching said pressure sensors.

3. The load dynamic monitoring pad device according to claim 2, **characterized in that**:
wherein said load transfer column has a first column part and a second column part formed as a whole,
the diameter of said first column part is larger than the diameter of said second column part,
the bottom of said sensor mounting slot is provided with a circular through-hole, and
the diameter of said circular through-hole is smaller than the inner diameter of said sensor mounting slot, a circle of supporting step is formed at the bottom of the sensor mounting slot,
said first column part is mounted on said supporting step, and the bottom surface of said second column part abuts said base plate.

4. The load dynamic monitoring pad device according to claim 1, **characterized in that**:
wherein said sensor fixing plate is a rectangular plate,
a plurality of said sensor mounting slots are distributed at the corner parts or the edge parts of said sensor fixing plate,
said pressure sensor is connected with cables for power supply and outputting detection signals,
said sensor fixing plate also has a lower cable groove which is connected to all said sensor mounting slots, and runs through the side edge of said sensor fixing plate,
said carrying pad also has an upper cable groove corresponding to said lower cable groove, which is spliced with said lower cable groove to form a cable routing part,
the cables extend in said cable routing part and extend from the side of said sensor fixing plate.

5. The load dynamic monitoring pad device according to claim 1, **characterized in that**:
wherein said lower cable groove comprises:
a cable assembling portion, arranged in the middle of said sensor fixing plate and extends along the length direction of said sensor fixing plate; and
a plurality of cable branching portions, the two ends of said cable branching portion is connected to said sensor mounting slot and said cable assembling portion, and the cables connected to said pressure sensors respectively extend along said cable branching portions and converge to said cable assembling portion,
the cross-section of said assembling portion and the cross-sections of said cable branching portions are all rectangular.

6. The load dynamic monitoring pad device according to claim 5, **characterized in that**:
wherein one end of said cable assembling portion located at the side edge of said sensor fixing plate is also provided with an adapter groove, the cross-section of said adapter groove is semi-circular,
said upper cable groove has an adapter limiting groove with a semi-circular cross-section, said adapter limiting groove and said adapter groove forms an adapter containing part with a circular cross-section for containing an adapter, the adapter is used for assembling a plurality of said cables.

7. The load dynamic monitoring pad device according to claim 1, **characterized in that**:
wherein said sensor fixing plate is a rectangular plate,
a plurality of said sensor mounting slots are symmetrically distributed below both sides of said steel rail.

8. The load dynamic monitoring pad device according to claim 1, **characterized in that**:
wherein said base plate, said sensor fixing plate and said carrying pad are all rectangular steel plates with consistent length and width,
the thickness of said sensor fixing plate is 10mm~15mm.

9. A load dynamic monitoring equipment, **characterized by** comprising:
a load dynamic monitoring pad device, arranged between the rail pad of the rail and the track bed, and has a plurality of pressure sensors for monitoring the pressure under said rail pad;
a signal transmission device, connected to said pressure sensors, and obtains analog pressure signals from said pressure sensors and converts them into digital signals; and
a calculation-analysis device, communicating with said signal transmission device, obtains said digital signals from said signal tranmission device and perform calculation and analysis,
wherein said load dynamic monitoring pad device is the load dynamic monitoring pad device according to any one of claims 1-8.

10. A load monitoring system, **characterized by** comprising:
a load dynamic monitoring equipment, for dynamically monitoring the pressure under the rail pad of the rail, and obtaining real-time monitoring results;
a plurality of monitoring terminals; and
a communication equipment, connected to said load dynamic monitoring equipment and said monitoring terminals, for enabling said monitoring terminals to obtain said real-time monitoring results,
wherein said load dynamic monitoring equipment is the load dynamic monitoring equipment according to claim 9.
